(19) Europäisches Patentamt

European Patent Office

Office européen des brevets

(11) Veröffentlichungsnummer: **0 244 614 B1**

(12) **EUROPÄISCHE PATENTSCHRIFT**

(45) Veröffentlichungstag der Patentschrift: **08.07.92**

(21) Anmeldenummer: **87104360.0**

(22) Anmeldetag: **24.03.87**

(51) Int. Cl.5: **C08J 5/18**, C08L 23/12, C08L 25/06, C08J 7/04, B65D 85/60

(54) **Opake Folie für den Bonbondreheinschlag.**

(30) Priorität: **04.04.86 DE 3611341**

(43) Veröffentlichungstag der Anmeldung:
**11.11.87 Patentblatt 87/46**

(45) Bekanntmachung des Hinweises auf die
Patenterteilung:
**08.07.92 Patentblatt 92/28**

(84) Benannte Vertragsstaaten:
**BE DE ES FR GB IT NL**

(56) Entgegenhaltungen:
**GB-A- 2 063 899**
**US-A- 3 663 488**
**US-A- 4 394 235**

(73) Patentinhaber: **HOECHST AKTIENGESELL-SCHAFT**
**Postfach 80 03 20**
**W-6230 Frankfurt am Main 80(DE)**

(72) Erfinder: **Janocha, Siegfried, Dr.**
**Weinfeldstrasse 28**
**W-6200 Wiesbaden(DE)**
Erfinder: **Crass, Günther**
**Bachstrasse 7**
**W-6204 Taunusstein 4(DE)**
Erfinder: **Schlögl, Gunter, Dr.**
**Finkenweg 2**
**W-6233 Kelkheim(DE)**
Erfinder: **Bothe, Lothar, Dr.**
**Kurt Schumacher Strasse 69E**
**W-6500 Mainz-Gonsenheim(DE)**

EP 0 244 614 B1

**Beschreibung**

Die Erfindung betrifft eine opake, biaxial streckorientierte Folie aus thermoplastischem Kunststoff für den Bonbondreheinschlag.

Eine besondere Art des Verschlusses von Volleinschlägen zum Zwecke der Verpackung von Verpackungsgütern ist das Drehen oder Wrappen. Bekannt ist dieses Verfahren der Verpackung insbesondere beim Volleinschlag kleinerer Verpackungsgüter, wobei insbesondere bevorzugt runde oder annähernd runde Gegenstände wie Bonbons, Flaschen, Kerzen, Dropsrollen, Schokoladen- und Marzipanriegel oder ähnliches häufig auf diese Art verpackt werden.

Voraussetzung für die Anwendung des Drehens sind die Eigenschaften der Folie, die an den Drehstellen nicht ein- oder abreißen darf, andererseits aber so steif sein muß, daß beim Drehvorgang kein Schrumpfen oder Krumpeln auftritt. Nach dem Stand der Technik wird für Bonboneinschläge vorwiegend Zellglas, also regenerierte Cellulose, nicht orientiertes Polypropylen oder PVC-Folie verwendet, siehe "Verpacken mit Kunststoffen" von Günther Kühne, herausgegeben 1974, Carl-Hanser-Verlag, München, Seite 63. Aus der US-A-3 663 488 sind Beispielsweise α- Olefin- Copolymer- Folien für den Bonbondreheinschlag bekannt. Des weiteren werden in der GB-A-2 063 899 Verpackungs folien aus Polypropylen/Styrol-Pfropfpolymeren beschrieben.

Im Rahmen der Weiterentwicklung der bekannten Verpakkungsfolien bestand für die vorliegende Erfindung die Aufgabe, eine opake Folie speziell für den Dreheinschlag von kleinen Verpackungsgütern, insbesondere von Bonbons zu schaffen, die durch ihre besonders hohe Eigensteifigkeit in der eingedrehten (verdrillten) Form ein verbessertes Twistverhalten besitzt und die darüber hinaus auch einen optimalen Maschinenlauf auf den Bonbondreheinschlagmaschinen garantiert und durch ihre sehr guten Gleiteigenschaften auch ein reibungsloses Befüllen der Beutel mit den eingeschlagenen Bonbons ermöglicht.

Unter dem Twistverhalten der Folie soll im Rahmen der vorliegenden Erfindung die Eigenschaft der Folie verstanden werden, daß sie nach dem seitlichen Eindrehen (Verdrillen) in der eingedrehten (verdrillten) Form eine so große Stabilität (Steifigkeit) aufweist, daß der Verpackungsinhalt bei Transport und Lagerung nicht durch selbsttätiges Aufdrehen der Folie aus der Verpackung herausgelöst wird. Das Twistverhalten der Folie läßt sich zahlenmäßig durch die Twistrate ausdrücken. Die Twistrate ist definiert als die prozentuale verbleibende Restverdrilling:

$$\text{Twistrate (TR) in Prozent} = \frac{\text{Bleibende Verdrillung}}{\text{Umdrehungen beim Verdrillen}} \cdot 100$$

Das bedeutet z.B. bei einer angenommenen Gesamtumdrehung von 1,5 (≙ 540°) beim Verdrillen und einem Rückstellwinkel von 100°:

$$
\begin{aligned}
\text{Gesamtumdrehungen:} \quad & 1,5\text{mal} = 540° \\
\text{Rückstellung} \quad & \underline{\phantom{xxxx}100°} \\
\text{Bleibende Verdrillung} \quad & = 440° \\
\frac{440}{540} \cdot 100 = TR & = 81,5\%
\end{aligned}
$$

Die vorstehende Aufgabe wird erfindungsgemäß durch eine Folie der eingangs genannten Gattung gelöst, deren Kennzeichenmerkmale darin bestehen, daß sie aus einer Polymerenmischung besteht umfassend 40 bis 60 Gew.-% Polypropylen und 35 bis 55 Gew.-% Polystyrol, bezogen auf das Gesamtgewicht der Polymerenmischung, und daß die Mischung außerdem noch 5 bis 15 Gew.-% Füllstoffe enthält, bezogen auf das Gesamtgewicht der Mischung.

Die erfindungsgemäße Folie kann eine einschichtige (Monofolie) oder eine mehrschichtige Folie sein. Die Monofolie besteht dabei vollständig aus der angegebenen Mischung, während bei einer Mehrschichtfolie die Basisschicht aus der angegebenen Mischung besteht und ein- oder beidseitig von funktionellen Deckschichten überzogen ist. Die Basisschicht hat bevorzugt eine Dicke von mehr als 50% der Gesamtdikke der Mehrschichtfolie.

Die Polymerenmischung enthält in bevorzugter Ausgestaltung Polypropylen in einer Menge von 45 bis

EP 0 244 614 B1

55 Gew.-% und Polystyrol in einer Menge von 35 bis 45 Gew.-%, bezogen jeweils auf das Gesamtgewicht der Polymerenmischung. Das Polypropylen soll insbesondere jeweils den überwiegenden Polymerenanteil darstellen.

Als bevorzugtes Polypropylen für die Mischung der Monofolie oder der Basisschicht wird im Rahmen der vorliegenden Erfindung ein isotaktisches Propylenhomopolymeres eingesetzt oder ein Copolymeres, das zum überwiegenden Anteil aus Propyleneinheiten zusammengesetzt ist. Solche Polymeren besitzen üblicherweise einen Schmelzpunkt von mindestens 140°C, bevorzugt im Bereich von 150 bis 170°C. Isotaktisches Polypropylen mit einem n-heptanlöslichen Anteil von weniger als 15 Gew.-%, Copolymere von Ethylen und Propylen mit einem Ethylengehalt von weniger als 10 Gew.-% und Copolymere von Propylen mit anderen Alphaolefinen mit 4 bis 8 Kohlenstoffatomen und mit einem Gehalt dieser Alphaolefine von weniger als 10 Gew.-% stellen typische Beispiele für das bevorzugte thermoplastische Polypropylen der Mischung dar.

Die bevorzugten thermoplastischen Polymeren haben zweckmäßigerweise einen Schmelzflußindex im Bereich von 0,5 g/10 min bis 8 g/10 min bei 230°C und 2,16 kg Belastung (DIN 53 735), insbesondere von 1,5 g/10 min bis 4 g/10 min. Als Polystyrol kann prinzipiell jedes beliebige Styrolpolymerisat eingesetzt werden. Es können auch Copolymerisate aus nicht substituierten und substituierten Styrolen wie Alkylstyrol oder Alk-oxy-Styrol verwendet werden.

Bei den Füllstoffen handelt es sich um anorganische oder organische, mit der Mischung aus Polypropylen und Polystyrol unverträgliche, pulverförmige Materialien. Anorganische Füllstoffe sind bevorzugt. Geeignete anorganische Füllstoffe sind Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und/oder Titandioxid, worunter Calciumcarbonat, Siliciumdioxid, Titandioxid oder Mischungen davon bevorzugt eingesetzt werden. Calciumcarbonat (Kreide) ist besonders bevorzugt. Geeignete organische Füllstoffe sind beispielsweise Partikel aus Polymeren wie Polymethylmethacrylat, Polyethylacrylat oder Polyethylen, aus Polyamiden oder aus Polymeren auf Basis von Polyestern. Die Füllstoffmenge beträgt erfindungsgemäß 5 bis 15 Gew.-%, bezogen auf das Gewicht der Mischungen aus Polymeren plus Füllstoffen. Die (mittlere) Teilchengröße des pulverförmigen Füllstoffes liegt erfindungsgemäß im Bereich von 2 bis 5 $\mu$m, vorzugsweise im Bereich von 3 bis 4 $\mu$m. Die Mischung für die Monofolie oder die Basisschicht kann zusätzlich auch zweckmässige Additive wie Antioxidantien, Antistatika, Farbstoffe und/oder Stabilisatoren in jeweils wirksamen Mengen enthalten.

Die Dichte der Folie ist niedriger als die rechnerische Dichte aus Art und Anteil der Einzelkomponenten.

Die Folie mit der vorstehend genannten Zusammensetzung besitzt im Hinblick auf ihre bestimmungsgemäße Verwendung eine sehr vorteilhafte Twistrate von größer/gleich 85%, gemessen bei einer Gesamtumdrehungsrate im Bereich von 360 bis 900°.

Die erfindungsgemäße Folie kann wie bereits erwähnt prinzipiell als Monofolie vorliegen. Eine Monofolie wird nach dem Extrusionsverfahren hergestellt, bei dem das thermoplastische Kunststoffmaterial in einem Extruder aufgeschmolzen wird, durch eine Düse extrudiert und zu einer Vorfolie abgeschreckt wird. Die Vorfolie wird danach in senkrecht zueinander verlaufenden Richtungen (längs und quer) streckorientiert und anschließend thermofixiert. Die Dicke der fertigen Folie liegt bevorzugt im Bereich von 15 bis 30 $\mu$m, besonders bevorzugt von 20 bis 25 $\mu$m.

In einer bevorzugten Ausführungsform besteht die erfindungsgemäße Folie jedoch aus einer Basisschicht und ein- oder beidseitig darauf aufgebrachten funktionellen Deckschichten.

Die ein- oder beidseitig auf die Basisschicht aus der Polymerenmischung aufgebrachten Deckschichten können sowohl heiß- als auch kaltsiegelfähige Schichten sein. Es kann sich auch um nicht siegelbare Schichten handeln. Alle diese Schichten können ein- oder beidseitig vorliegen. Eine Heißsiegelschicht besteht vorzugsweise aus einem Ethylen-Homopolymerisat (Polyethylen hoher Dichte oder Polyethylen niedriger Dichte), einem Copolymerisat aus Propylen als Hauptkomponente und Ethylen, vorzugsweise in einer Menge von maximal 10 Gew.-% (bezogen auf das Copolymerisat), einem Copolymerisat aus Propylen als Hauptkomponente und Buten-(1), vorzugsweise in einer Menge von 10 bis 15 Gew.-% (bezogen auf das Copolymerisat), einem Terpolymerisat aus Propylen, Ethylen und einem Alphaolefin mit 4 bis 10 Kohlenstoffatomen, vorzugsweise einem solchen aus 93,2 bis 99,0 Gew.-% Propylen, 0,5 bis 1,9 Gew.-% Ethylen und 0,5 bis 4,9 Gew.-% eines Alphaolefins mit 4 bis 10 Kohlenstoffatomen, oder aus einer Mischung dieser Polymeren. Die Comonomeren sind in den Polymerisaten im wesentlichen statistisch verteilt.

Die Deckschicht bzw. die Deckschichten können auch aus einem Propylenhomopolymeren bestehen, wobei der Schmelzindex des für die Deckschicht eingesetzten Polymeren einen bevorzugt um 0,5 bis 1,0 g/10 min höheren Wert aufweisen soll als der Schmelzindex der für die Basisschicht eingesetzten Polymerenmischung. Geeignete Kaltsiegelschichten bestehen aus Polymerisaten auf der Basis von natürlichem oder synthetischem Kautschuk.

3

Der Deckschicht/den Deckschichten ist zur Verbesserung der Gleitfähigkeit im Hinblick auf eine zufriedenstellende Maschinengängigkeit und im Hinblick auf ein reibungsloses Einfüllen des verpackten Packguts in Beutel ein Gleitmittel zugefügt. Als Gleitmittel wird zweckmäßigerweise ein Polydialkylsiloxan, vorzugsweise ein Polydialkylsiloxan, das 1 bis 4 Kohlenstoffatome in der Alkylgruppe enthält, eingesetzt, wobei Polydimethylsiloxan besonders bevorzugt ist. Das Polydialkylsiloxan hat eine kinematische Viskosität von 1 000 bis 100 000 mm$^2$/sec bei 25°C, vorzugsweise von 5 000 bis 50 000 mm$^2$/sec bei 25°C. Die Einsatzmenge des Polydialkylsiloxans in der Deckschicht bzw. den Deckschichten beträgt 0,4 bis 1,5 Gew.-%, vorzugsweise 0,5 bis 1 Gew.-%, bezogen auf das Gewicht der Deckschichten.

Die Dicke der erfindungsgemäßen Mehrschichtfolie beträgt ebenfalls 15 bis 30 $\mu$m, vorzugsweise 20 bis 25 $\mu$m, wobei die Dicke der Deckschicht(en) 0,5 bis 5 $\mu$m, vorzugsweise 0,5 bis 2 $\mu$m, bezogen auf die jeweilige Deckschicht beträgt.

Um bestimmte Eigenschaften der erfindungsgemäßen Folie noch weiter zu verbessern, können sowohl die Basisschicht als auch die Deckschicht(en) entsprechende Zusätze in einer jeweils wirksamen Menge enthalten, vorzugsweise seien Antistatika, Stabilisatoren und Nukleierungsmittel genannt. Insbesondere zur Verbesserung der Konfektionierbarkeit kann der Deckschicht bzw. den Deckschichten 0,1 bis 1 Gew.-%, insbesondere 0,2 bis 0,5 Gew.-%, eines organischen oder anorganischen Antiblockmittels zugesetzt werden. Geeignete Antiblockmittel sind beispielsweise unverträgliche organische Polymerisate wie Polyamid, Polyester, Polycarbonate und dergleichen oder anorganische Substanzen wie Siliciumdioxid und Silikate, insbesondere eignet sich Aluminiumsilikat.

Im folgenden soll die Erfindung anhand von Ausführungsbeispielen noch näher erläutert werden.

Es wurden zwei erfindungsgemäße Beispiele (Beispiel 1 und 2) und drei Vergleichsbeispiele (Beispiele 3, 4 und 5) hergestellt. Die Twistrate wurde bei den Folien aller Beispiele einheitlich nach der oben angegebenen Methode bestimmt. Alle Folien wurden 1,5mal (= 540°) gedreht, und es wurde dann losgelassen und der Rückstellwinkel gemessen. Daraus berechnet sich die jeweils angegebene Twistrate in Prozent.

Das Maschinenlaufverhalten wurde durch einfachen Vergleich der hergestellten Folien miteinander beurteilt.

Beispiel 1

Es wurde eine Monofolie bei einer Temperatur von etwa 280°C durch eine Flachdüse extrudiert. Die Polymerenmischung bestand aus 50 Gew.-% Polypropylen und 40 Gew.-% Polystyrol. Die Polymerenmischung enthielt zusätzlich 10 Gew.-% pulverförmiges Calciumcarbonat mit einer mittleren Teilchengröße von 3,8 $\mu$m, alle Gew.-%-Angaben beziehen sich auf das Gesamtgewicht von Polymeren plus Füllstoff. Nach dem Abkühlen der extrudierten Monofolie mit einer Kühlwalze auf etwa 30°C wurde die Folie mit Hilfe von unterschiedlich schnell angetriebenen Walzen bei einer Temperatur von 125°C in Längsrichtung mit einem Streckverhältnis von 6,0 streckorientiert und anschliessend in einem Querstreckrahmen bei einer Temperatur von 165°C mit einem Streckverhältnis von 9,0 quergestreckt. Danach wurde die biaxial streckorientierte Folie bei einer Temperatur von 160°C und mit einer Zeitdauer von 5 s thermofixiert. Die entstandene opake Folie hatte eine Dichte von 0,8 g/cm$^3$ und eine Dicke von 23 $\mu$m. Angaben über die Twistrate und das Maschinenlaufverhalten der Folie finden sich in der Tabelle am Ende der Beispiele.

Beispiel 2

Nach dem Coextrusionsverfahren wurde mit Hilfe einer Flachdüse eine Dreischichtfolie hergestellt umfassend eine Basisschicht wie in Beispiel 1 angegeben, die als Antistatikum zusätzlich 0,1 Gew.-% Armostat® 300 = N,N-bis-ethoxy-alkyl-amin enthält, und zwei Deckschichten aus Polypropylen und einem Zusatz von 1,0 Gew.-% Dimethylpolysiloxan mit einer kinematischen Viskosität von 30 000 mm$^2$/s. Die Herstellung der Folie erfolgte wie in Beispiel 1 angegeben, die Dreischichtfolie hatte eine Dicke von insgesamt 25 $\mu$m, wobei die Deckschichten jeweils etwa 1 $\mu$m dick waren. Die Twistrate und das Maschinenlaufverhalten der Folie von Beispiel 2 sind ebenfalls in der Tabelle am Ende der Beispiele aufgeführt.

Beispiel 3 (Vergleichsbeispiel)

Gemäß der DE-OS 28 14 311 wurde mit einer Flachdüse eine 25 $\mu$m dicke Polypropylenfolie mit beidseitig vorhandenen heißsiegelfähigen Deckschichten von jeweils 1 $\mu$m bei etwa 270°C coextrudiert. Die Polypropylenschmelze enthielt 8 Gew.-% fein verteilte Calciumcarbonatteilchen einer mittleren Teilchengröße von 2,4 $\mu$m. Die Deckschicht bestand jeweils aus einem statistischen Mischpolymerisat von Propylen und 4 Gew.-% Ethylen. Nach dem Abkühlen mit einer Kühlwalze auf etwa 30°C wurde die Folie bei 125°C in Längsrichtung, Streckverhältnis 5,5, und anschließend bei 165°C in Querrichtung, Streckverhältnis 9,0, gestreckt. Die anschließende Thermofixierung erfolgte bei 160°C.

Die Dichte der Folie betrug 0,75 g/cm$^3$. Angaben über Twistrate und Maschinenlaufverhalten sind in der nachfolgenden Tabelle aufgeführt.

Beispiel 4 (Vergleichsbeispiel)

Es wurde eine Polypropylenfolie mit beidseitig vorhandenen heißsiegelfähigen Deckschichten bei etwa 270°C durch eine Flachdüse coextrudiert. Die Schmelze der die Basisschicht bildenden Folie bestand aus 80 Gew.-% Propylen-Homopolymerisat und 20 Gew.-% pulverförmigem Calziumcarbonat mit einer mittleren Teilchengröße von 3,8 $\mu$m. Die Schmelze des die Deckschichten bildenden Polymeren bestand aus einem statistischen Copolymerisat von Propylen und 4 Gew.-% Ethylen. Nach dem Abkühlen der coextrudierten Folie mit einer Kühlwalze auf etwa 30°C wurde die Folie bei 125°C in Längsrichtung, Streckverhältnis 6,0, und dann bei 165°C in Querrichtung, Streckverhältnis 9,0, gestreckt. Die anschließende Thermofixierung erfolgte bei 160°C 5 s lang.

Die so erhaltene opake Polypropylen-Mehrschichtfolie hatte eine Dichte von 0,46 g/cm$^3$ und eine Dicke von 25 $\mu$m, die Dicke der Heißsiegelschichten betrug jeweils 1 $\mu$m. Angaben über das Twistverhalten und betreffend das Maschinenlaufverhalten siehe Tabelle.

Beispiel 5 (Vergleichsbeispiel)

Durch Extrusion und anschließende Streckorientierung und Hitzefixierung analog zu den vorherigen Beispielen wurde eine Monofolie hergestellt, bestehend aus einer Mischung aus 75 Gew.-% Propylenhomopolymerem und 25 Gew.-% eines niedrigmolekularen Kohlenwasserstoffharzes mit einem Erweichungspunkt im Bereich von 80 bis 120°C, es handelte sich um das unter der Bezeichnung "Arkon P 125®" von der Firma Arakawa, Japan, vertriebene Kohlenwasserstoffharz. Die Monofolie hatte eine Dicke von 25 $\mu$m. Twistrate und Maschinenlaufverhalten siehe nachfolgende Tabelle.

**Tabelle: Beispiele und Vergleichsbeispiele**

| | | Twistrate (%) | Maschinenlaufverhalten beim Drehen und Beutelfüllen |
|---|---|---|---|
| Beispiel 1 | Monofolie aus 50% PP 40% PS 10% $CaCO_3$ | 91 | +- |
| Beispiel 2 | ABA-Dreischichtfolie Basis wie 1 + 0,1% Armostat ® 300 Deckschichten PP + 1,0% DMPS | 88 | ++ |
| Beispiel 3 | ABA-Dreischichtfolie Basis PP + 8% $CaCO_3$ Deckschichten $C_2$-$C_3$-Copolymer mit 4% $C_2$-Anteil | 25 | - |
| Beispiel 4 | ABA-Dreischichtfolie Basis PP + 20% $CaCO_3$ Deckschichten wie Beispiel 3 | 59 | - |
| Beispiel 5 | Monofolie 75% PP + 25% Kohlenwasserstoffharz | 72 | +- |

++ sehr gut + gut +- ausreichend - mangelhaft -- kein Lauf möglich

## Patentansprüche

1. Opake, biaxial streckorientierte Folie aus thermoplastischem Kunststoff für den Bonbondreheinschlag, dadurch gekennzeichnet, daß sie aus einer Polymerenmischung besteht umfassend 40 bis 60 Gew.-% Polypropylen und 35 bis 55 Gew.-% Polystyrol, bezogen auf das Gesamtgewicht der Polymerenmischung, und daß die Mischung außerdem noch 5 bis 15 Gew.-% Füllstoffe enthält, bezogen auf das Gesamtgewicht der Mischung , wobei die füllstoffe anorganische und organische pulverförmige Materialien sind mit einer mittleren Teilchengröße von 2 bis 5 $\mu$m.

6

2. Folie nach Anspruch 1, dadurch gekennzeichnet, daß die Polymerenmischung Polypropylen in einer Menge von 45 bis 55 Gew.-% und Polystyrol in einer Menge von 35 bis 45 Gew.-% enthält, bezogen jeweils auf das Gesamtgewicht der Polymerenmischung.

3. Folie nach Anspruch 1 oder 2, dadurch gekennzeichnet, daß die Füllstoffe anorganische Füllstoffe sind, bevorzugt Calciumcarbonat, Siliziumdioxid, Titandioxid oder Mischungen von diesen.

4. Folie nach einem der Ansprüche 1 bis 3, dadurch gekennzeichnet, daß die Dichte der Folie niedriger ist als die rechnerische Dichte aus Art und Anteil der Einzelkomponenten.

5. Folie nach einem der Ansprüche 1 bis 4, dadurch gekennzeichnet, daß die Twistrate der Folie größer/gleich 85% ist, gemessen bei einer Gesamtumdrehungsrate im Bereich von 360 bis 900°.

6. Folie nach einem der Ansprüche 1 bis 5, dadurch gekennzeichnet, daß sie mehrschichtigen Aufbau besitzt, wobei die Basisschicht aus einer Polymerenmischung aus 40 bis 60 Gew.-% Polypropylen und 35 bis 55 Gew.% Polystyrol besteht und zusätzlich 5 bis 15 Gew.-% Füllstoffe enthält und ein- oder beidseitig mit funktionellen Deckschichten überzogen ist.

7. Folie nach Anspruch 6, dadurch gekennzeichnet, daß die Dicke der Basisschicht mehr als 50% der Gesamtdicke der Mehrschichtfolie beträgt.

8. Folie nach Anspruch 6 oder 7, dadurch gekennzeichnet, daß die Dicke der Deckschicht(en) im Bereich von 0,5 bis 5 $\mu$m, bevorzugt von 0,5 bis 2 $\mu$m, liegt.

9. Folie nach einem der Ansprüche 6 bis 8, dadurch gekennzeichnet, daß die Deckschichten als Gleitmittel 0,4 bis 1,5 Gew.-% Polydialkylsiloxan enthalten, bezogen auf das Gewicht der Deckschichten.

10. Folie nach einem der Ansprüche 1 bis 9, dadurch gekennzeichnet, daß die Gesamtdicke der Folie im Bereich von 15 bis 30 $\mu$m liegt, bevorzugt im Bereich von 20 bis 25 $\mu$m.

**Claims**

1. Opaque, biaxially stretch-oriented film of a thermoplastic, for candy twist wrapping, wherein the film is formed of a polymer mixture comprising from 40 to 60 % by weight of polypropylene and from 35 to 55 % by weight of polystyrene, relative to the total weight of the polymer mixture, and the mixture additionally containing from 5 to 15 % by weight of fillers, relative to the total weight of the mixture, the fillers being inorganic and organic pulverulent materials which have a mean particle size of 2 to 5 $\mu$m.

2. A film as claimed in claim 1, wherein the polymer mixture comprises polypropylene in an amount from 45 to 55 % by weight and polystyrene in an amount from 35 to 45 % by weight, each relative to the total weight of the polymer mixture.

3. A film as claimed in claim 1 or 2, wherein the fillers comprise inorganic fillers, preferably calcium carbonate, silicon dioxide, titanium dioxide or mixtures thereof.

4. A film as claimed in any of claims 1 to 3, wherein the density of the film is lower than the density obtained by calculation from the type and proportion of the individual components.

5. A film as claimed in any of claims 1 to 4, wherein the twist rate of the film is greater than or equal to 85 %, as measured at a total rate of winding in the range from 360 to 900°.

6. A film as claimed in any of claims 1 to 5, which has a multi-layer structure, the base layer comprising a polymer mixture of from 40 to 60 % by weight of polypropylene and from 35 to 55 % by weight of polystyrene and additionally containing from 5 to 15 % by weight of fillers and being coated with functional covering layers on one or both sides.

7. A film as claimed in claim 6, wherein the thickness of the base layer amounts to more than 50 % of the total thickness of the multi-layer film.

**8.** A film as claimed in claim 6 or 7, wherein the thickness of the covering layer or layers is in the range from 0.5 to 5 $\mu$m, preferably from 0.5 to 2 $\mu$m.

**9.** A film as claimed in any of claims 6 to 8, wherein the covering layers contain, as a lubricant, from 0.4 to 1.5 % by weight of polydialkylsiloxane, relative to the weight of the covering layers.

**10.** A film as claimed in any of claims 1 to 9, wherein the total thickness of the film is in the range from 15 to 30 $\mu$m, preferably in the range from 20 to 25 $\mu$m.

**Revendications**

**1.** Feuille opaque en matière thermoplastique, orientée par étirage biaxial, pour emballage de bonbons par torsion, caractérisée en ce qu'elle se compose d'un mélange de polymères comprenant de 40 à 60 % en poids de polypropylène et de 35 à 55 % en poids de polystyrène, par rapport au poids total du mélange de polymères, et que le mélange renferme par ailleurs encore de 5 à 15 % en poids de charges, par rapport au poids total du mélange, les charges étant des substances pulvérulentes minérales et organiques, dont la taille moyenne des particules vaut de 2 à 5 $\mu$m.

**2.** Feuille selon la revendication 1, caractérisée en ce que le mélange de polymères comprend du polypropylène à raison de 45 à 55 % en poids et du polystyrène à raison de 35 à 45 % en poids, chaque fois par rapport au poids total du mélange de polymères.

**3.** Feuille selon la revendication 1 ou 2, caractérisée en ce que les charges sont des charges minérales, de préférence du carbonate de calcium, du dioxyde de silicium, du dioxyde de titane ou leurs mélanges.

**4.** Feuille selon une quelconque des revendications 1 à 3, caractérisée en ce que la densité de la feuille est plus faible que la densité calculée à partir de la nature et de la proportion des composants individuels.

**5.** Feuille selon une quelconque des revendications 1 à 4, caractérisée en ce que le degré de torsion de la feuille est supérieur ou égal à 85 %, mesuré pour une torsion globale de 360 à 900°.

**6.** Feuille selon une quelconque des revendications 1 à 5, caractérisée en ce qu'elle possède une structure multicouche, la couche de base étant constituée d'un mélange de polymères à base de 40 à 60 % en poids de polypropylène et 35 à 55 % en poids de polystyrène et, en plus, de 5 à 15 % en poids de charges, et qu'elle est recouverte, sur une ou deux de ses faces, de couches de couverture fonctionnelles.

**7.** Feuille selon la revendication 6, caractérisée en ce que l'épaisseur de la couche de base vaut plus de 50 % de l'épaisseur totale de la feuille multicouche.

**8.** Feuille selon la revendication 6 ou 7, caractérisée en ce que l'épaisseur de la (des) couche(s) de couverture vaut de 0,5 à 5 $\mu$m, de préférence de 0,5 à 2 $\mu$m.

**9.** Feuille selon une quelconque des revendications 6 à 8, caractérisée en ce que les couches de couverture contiennent, comme lubrifiant, de 0,4 à 1,5 % en poids de polydialkylsiloxane, par rapport au poids des couches de couverture.

**10.** Feuille selon une quelconque des revendications 1 à 9, caractérisée en ce que l'épaisseur totale de la feuille vaut entre 15 et 30 $\mu$m, de préférence entre 20 et 25 $\mu$m.